# EUROPÄISCHE PATENTSCHRIFT

(11) **EP 3 016 558 B1**
(45) Veröffentlichungstag und Bekanntmachung des Hinweises auf die Patenterteilung: **11.10.2017**
(21) Anmeldenummer: 14728077.0
(22) Anmeldetag: 15.04.2014
(51) Int. Cl.: B01L 7/00, B01L 99/00, A47J 39/00, F24C 15/08, F24C 15/32, B01L 1/02, B65D 88/52, B65D 88/74, A61G 12/00, A47K 10/06

(54) **TEMPERIERSCHRANK**
TEMPERATURE CONTROL CABINET
ARMOIRE TEMPÉRÉE

(30) Priorität: 04.07.2013 DE 202013102927 U
(43) Veröffentlichungstag der Anmeldung: 11.05.2016
(73) Patentinhaber: Barkey GmbH & Co. KG, 33818 Leopoldshöhe (DE)
(72) Erfinder: TESCHNER, Holger, 33617 Bielefeld (DE); NOWACK, Armin, 33803 Steinhagen (DE)
(74) Vertreter: Ostermann, Thomas
(86) Internationale Anmeldenummer: PCT/DE2014/100130
(87) Internationale Veröffentlichungsnummer: WO 2015/000464

(56) Entgegenhaltungen:
- DE-A1-102004 008 051
- US-A- 4 455 478
- US-A- 4 726 193
- US-A- 4 917 256
- US-A- 5 860 281
- US-B1- 6 260 360

## Beschreibung

Die Erfindung betrifft einen Temperierschrank nach dem Oberbegriff des Patentanspruchs 1.

Aus der DE 200 05 770 U1 ist ein Temperierschrank für medizinische Produkte, wie beispielsweise Infusionen, Decken und dergleichen bekannt, der aus einem Gehäuse besteht, in dem mehrere als Schubfächer ausgebildete Fächer zur Aufnahme der medizinischen Produkte verschiebbar gelagert sind. Zur Temperierung der medizinischen Produkte ist eine elektrische Temperiereinrichtung innerhalb eines Luftkanals vorgesehen, der sich in einem rückwärtigen Raum des Gehäuses vertikal erstreckt. Der Luftkanal weist an einem oberen und unteren Ende jeweils einen Luftdurchlass auf, so dass temperierte Luft mittels eines Lüfters den Fächern von unten zugeführt werden kann. Es entsteht eine Luftzirkulation, da Ablageböden der Fächer gelocht ausgebildet sind. Nachteilig an dem bekannten Temperierschrank ist, dass die medizinischen Produkte nicht gleichmäßig temperiert werden, da das untere Fach zuerst von dem temperierten Luftstrom erfasst wird, während das obere Fach lediglich von dem Luftstrom erfasst wird, der die weiteren Fächer bereits durchströmt hat. Ein weiterer Nachteil besteht darin, dass die Zugänglichkeit der Temperiereinrichtung für Reparaturzwecke relativ aufwendig ist, da mehrere Wände des Gehäuses entfernt werden müssen.

Aus der US 6 260 360 B1 ist ein Temperierschrank mit einem Gehäuse enthaltend eine Temperier- und Bedieneinrichtung bekannt, damit ein innerhalb des Gehäuses angeordnetes Produkt auf eine gewünschte Temperatur gehalten werden kann. Der Temperierschrank ist als eine tragbare Box ausgebildet, die ein Deckenmodul aufweist, in dem die Temperier- und Bedieneinrichtung integriert sind. In dem Deckenmodul erfolgt eine Luftführung in vertikaler Richtung.

Aus der US 5 860 281 ist eine Temperiereinrichtung bekannt, die als tragbare Temperierbox ausgebildet ist. Sie umfasst einen Innenraum, der von einem Deckenmodul abgedeckt ist. In dem Deckenmodul ist sandwichartig eine übereinander angeordnete Lüfter-Kühleinheit angeordnet. Eine gezielte Luftstromführung innerhalb des Innenraums ist nicht vorgesehen. In dem Innenraum der Temperaturbox sind keine Luftführungsmittel vorgesehen.

Aufgabe der vorliegenden Erfindung ist es daher, einen Temperierschrank mit einer Temperiereinrichtung derart, weiterzubilden, dass er einen kompakten Aufbau aufweist, eine effektive Temperierung von in einem Innenraum angeordneten medizinischen Produkten ermöglicht und insbesondere die Montage des Temperierschranks bzw. die Austauschbarkeit von Komponenten der Temperiereinrichtung vereinfacht wird.

Zur Lösung dieser Aufgabe weist die Erfindung die Merkmale des Patentanspruchs 1 auf.

Der besondere Vorteil der Erfindung besteht darin, dass durch eine Integrierte Anordnung einer Temperiereinrichtung und einer Bedieneinrichtung in einem gemeinsamen Deckenmodul eine verbesserte Zugänglichkeit der elektrischen Bauteile des Temperierschrankes gewährleistet ist. Die elektrischen Bauteile der Temperiereinrichtung bzw. der Bedieneinrichtung befinden sich in einer gemeinsamen Baueinheit, die einen direkten und schnellen Zugang zu denselben ermöglicht, um diese beispielsweise zu Reparaturzwecken auszutauschen. Darüber hinaus wird die Montage vereinfacht, da alle elektrischen Bauteile in einem kompakten Deckenmodul bereitgestellt und mit den weiteren mechanischen Bauteilen des Temperierschrankes verbunden werden können. Nach der Erfindung weist das Deckenmodul eine Bodenwandung auf, die in einem vorderen Bereich einen Lufteinlaß und in einem hinteren Bereich einen Luftauslaß aufweist. Dadurch, dass die elektrischen Bauteile alle oberhalb des Gehäuseinnenraums angeordnet sind, weist der Temperierschrank eine relativ geringe Bautiefe auf. Nach der Erfindung schließt sich an dem hinteren Luftauslaß des Deckenmoduls ein Luftkanal an, der sich in vertikaler Richtung bis in den Bereich einer Bodenwand des Temperierschrankes erstreckt. Dieser Luftkanal weist vorderseitig jeweils Fächern zugeordnete Durchbrechungen auf, so dass die von dem Deckenmodul bereitgestellte temperierte Luft über den Luftkanal direkt bzw. gleichzeitig den jeweiligen Fächern bzw. den in denselben positionierten medizinischen Produkten zur Verfügung gestellt werden kann. Hierdurch wird eine homogene Erwärmung aller in den Fächern angeordneten medizinischen Produkten gewährleistet.

Nach einer bevorzugten Ausführungsform der Erfindung weist das Deckenmodul an einer Vorderseite ein Display auf, von dem sich rückseitig eine elektronische Steuerschaltung anschließt. Diese kann Bestandteil der Bedieneinrichtung und/oder der Temperiereinrichtung sein. Vorteilhaft kann die elektronische Steuerschaltung platzsparend und kompakt aufgebaut werden.

Nach einer Weiterbildung der Erfindung verlaufen die vorderen Durchbrechungen des Luftkanals in einer horizontalen Ebene unterhalb von Auflageböden der Fächer, so dass der Luftstrom von unten durch die Auflageböden zu den jeweiligen zu temperierenden Produkten strömen kann.

Nach einer Weiterbildung der Erfindung ist in einer Wandung des Luftkanals, durch den mittels eines Lüfters Luft von den unterhalb angeordneten Schubladen angesaugt wird, eine Öffnung vorgesehen, so dass Luft aus der Umgebung angesaugt werden kann. Es bildet sich ein Kühlluftstrom aus, der von einer Vorderseite des Deckenmoduls kommend an einer zu kühlenden Steuereinrichtung entlangstreicht und diese damit kühlt. Vorteilhaft kann somit der zum Umwälzen der Luft innerhalb des Temperierschranks vorgesehene Lüfter auch zur Kühlung der Steuereinrichtung über den so gebildeten Bypasskanal dienen.

Nach einer Weiterbildung der Erfindung sind in einem hinteren Bereich des Temperierschrankes Einklemmnuten an Halterungen vorgesehen, so dass bedienungsfreundlich Kabel formschlüssig angebracht werden können.

Nach einer Weiterbildung der Erfindung ist die Rückwand mit mindestens einer Seitenwand einstückig verbunden, wobei ein Scharnier gebildet ist zum Verschwenken der Seitenwand relativ zu der Rückenwand. Beispielsweise kann das Scharnier durch eine Materialverdünnung gebildet sein, wobei eine abgeschrägte Materialfläche sicherstellt, dass in der Montagestellung die Seitenwand stets senkrecht zu der Rückenwand verläuft. Die Montage des Temperierschrankes kann somit ohne ansonsten erforderliche Befestigungsmittel vereinfacht werden.
Weitere Vorteile der Erfindung ergeben sich aus den weiteren Unteransprüchen.

Ausführungsbeispiele der Erfindung sind nachfolgend anhand der Zeichnungen näher erläutert.

Es zeigen:

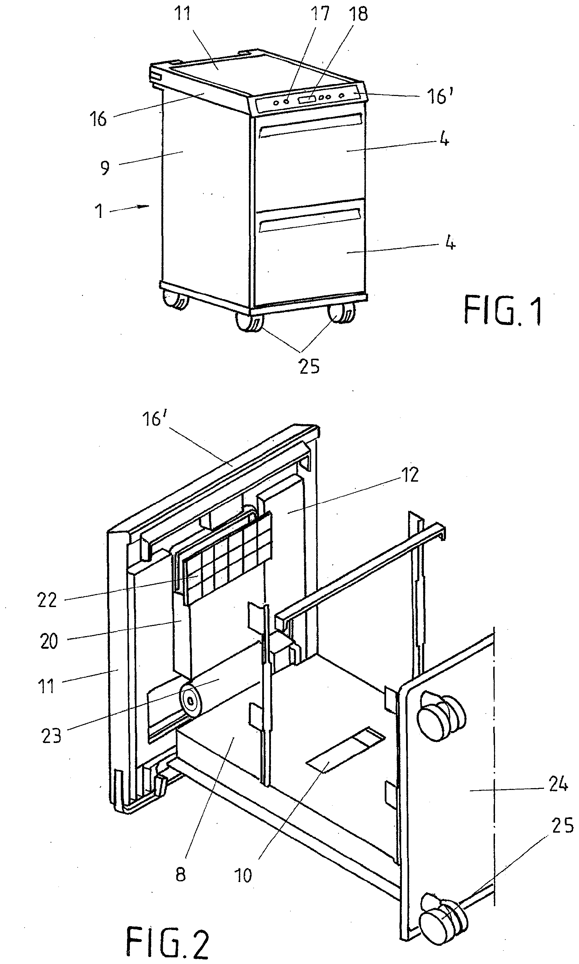

- Figur 1: eine perspektivische Darstellung eines Temperierschrankes,
- Figur 2: eine perspektivische Darstellung eines Deckenmoduls des Temperierschranks von unten im montierten Zustand unter Weglassung von Seitenwänden und Schubfächern,

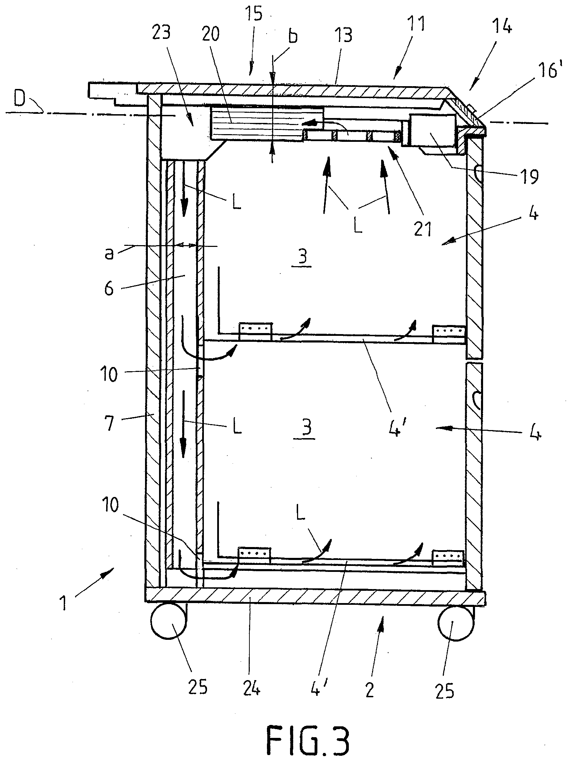

- Figur 3: einen Vertikalschnitt durch den Temperierschrank,

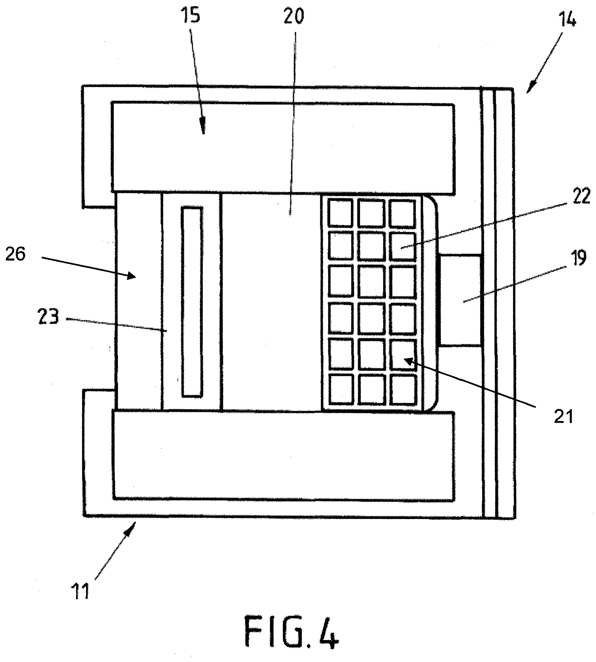

- Figur 4: eine Ansicht des Deckenmoduls von unten,
- Figur 5: eine schematische Draufsicht auf eine Rückwand und Seitenwände des Temperierschrankes in einer Montageposition und in einer Nichtmontageposition,
- Figur 6: eine schematische Seitenansicht des Deckenmoduls mit eingezeichnetem Luftkanal (Hauptkanal) und einem Beipasskanal und
- Figur 7: eine schematische Rückansicht des Temperierschrankes im Bereich einer Griffstange.

Ein Temperierschrank 1 kann zum Kühlen und/oder Wärmen von in demselben gelagerten medizinischen Produkten, wie beispielsweise Infusionen, Decken und dergleichen genutzt werden. Im vorliegenden Ausführungsbeispiel ist der Temperierschrank 1 als ein Wärmeschrank ausgebildet, in dem die medizinischen Produkte auf eine Solltemperatur erwärmt und geregelt werden. Der Wärmeschrank 1 weist ein Gehäuse 2 mit einem Innenraum 3 auf, in dem mehrere Fächer 4 vorgesehen sind zur Aufnahme der medizinischen Produkte 5. Im vorliegenden Ausführungsbeispiel sind die Fächer 4 als Schubladen ausgebildet, die in üblicherweise horizontal verschiebbar zwischen einer Öffnungs- und einer Schließposition gelagert sind. Die Schubladen 4 weisen jeweils einen Ablageboden 4' auf, auf dem die Produkte 5 gestellt sind. Dieser Ablageboden 4' weist Lochungen auf, sodass ein Luftstrom L von unten in die Schublade 4 gelangen kann, während die in dieser Schublade 4 angeordneten Produkte 5 von dem Luftstrom L umströmt werden.

Der Wärmeschrank 1 weist in einem hinteren Bereich einen vertikal verlaufenden hinteren Luftkanal 6 auf, mittels dessen der temperierte Luftstrom L von einem oberen Bereich des Gehäuses 2 in einem unteren Bereich desselben geführt wird. Der hintere Luftkanal 6 schließt sich an einer Rückwand 7 des Gehäuses 2 an und weist eine in einem Abstand a zu der Rückwand 7 verlaufende vordere Kanalwand 8 auf. Schmalseiten des hinteren Luftkanals 6 werden durch gegenüberliegende Gewindestangen gebildet, die an der Rückwand 7 des Gehäuses 2 befestigt sind. Die beiden Gewindestangen liegen somit jeweils zum einen an der Rückwand 7 und zum anderen an der vorderen Kanalwand 8 an und erstrecken sich durchgehend von dem oberen Bereich zu dem unteren Bereich des Gehäuses 2. Lediglich im Bereich einer Horizontalebene, die unterhalb der jeweiligen Ablageböden 4' der Schubfächer 4 verläuft, weist die vordere Kanalwand 8 eine Durchbrechung 10 auf, durch die ein Teil des Luftstroms L in Richtung der jeweiligen Schubladen 4 geführt wird. Hierzu kann die vordere Kanalwand 8 auf einer der Rückwand 7 zugewandten Seite ein entsprechendes Leitblech aufweisen, das sich von einem unterem Rand der Durchbrechung 10 in einem Winkel erstreckt.

Der hintere Luftkanal 6 wird somit im Wesentlichen durch die Rückwand 7, die vordere Kanalwand 8 sowie aufrechte Gewichtsstangen begrenzt. Der hintere Luftkanal 6 verläuft im Wesentlichen in vertikaler Richtung. Seine Dicke a wird durch den für die Temperierung der Produkte 5 erforderlichen Luftdurchsatz bestimmt. Die Dicke a des Luftkanals 6 kann vergleichsweise klein sein, so dass eine ausreichende Temperierung der Produkte 5 gewährleistet ist.

Oberhalb der Seitenwände 9 und der Rückwand 7 ist ein von denselben entfernbares bzw. lösbares Deckenmodul 11 vorgesehen, das quasi als eine Deckenwand dient. Das Deckenmodul 11 kann beispielsweise durch Verschraubung mit einer zwischen den gegenüberliegenden Seitenwänden 9 befestigten Traverse und/oder der Rückwand 7 verbunden sein. Die Traverse kann an Innenseiten der Seitenwände 9 befestigt sein und verläuft senkrecht zu denselben.

Das Deckenmodul 11 weist eine großflächige Bodenwandung 12 auf, die den Innenraum 3 nach obenhin abschließt. In einem Abstand b zu der Bodenwandung 12 erstreckt sich eine Deckenwandung 13, wobei der Abstand b von der Dimension einer Bedieneinrichtung 14 und/oder einer Temperiereinrichtung 15 abhängig ist. Die Bodenwandung 12 und die Deckenwandung 13 sind über entsprechende Schmalwandungen 16 miteinander verbunden, wobei eine vordere Schmalwandung 16' als eine Bedienleiste ausgebildet ist. Diese Bedienleiste 16' weist Eingabe- bzw. Ausgabemittel, wie Tasten 17 oder ein Display 18 auf, in der beispielsweise die vorgegebene Temperatur (Ist- und/oder Solltemperatur) des Innenraums 3 angezeigt wird. Das Deckenmodul 11 bildet eine Baueinheit, in der die Bedieneinrichtung 14 und die Temperiereinrichtung 15 angeordnet sind.

Die Bedieneinrichtung 14 weist neben der Bedienleiste 16' bzw. dem Display 18 eine elektronische Steuerschaltung (Steuereinrichtung) 19 auf, die sich in rückwärtiger Richtung unmittelbar an das Display 18 anschließt. In dem vorderen Bereich des Innenraums des Deckenmoduls 11 kann insbesondere auch eine Steuerelektronik für die Temperiereinrichtung 15 vorgesehen sein, mittels derer die von einem Temperiergerät bzw. Heizgerät 20 abzugebende Wärmeleistung gesteuert bzw. geregelt wird. Die Steuereinrichtung 19 bzw. die Elektronik befindet sich in einem Bereich zwischen dem Display 18 und dem Heizgerät 20. In diesem Bereich weist die Bodenwandung 12 des Deckenmoduls 11 Durchbrechungen für einen Lufteinlaß 21 auf, so dass der Luftstrom L von den Schubladen 4 kommend in das Deckenmodul 11 einströmen kann. Ein im Bereich des Lufteinlasses 21 angeordneter Filter 22 bewirkt das Herausfiltern von Schmutzpartikeln, so dass ein gereinigter Luftstrom L in dem Deckenmodul 11 in Richtung des benachbarten Heizgerätes 20 umgelenkt werden kann. Das Heizgerät 20 wird elektrisch betrieben und weist einen Wärmeüberträger mit relativ großen Oberflächensegmenten auf, so dass eine relativ große Wärmemenge an den vorbei streichenden Luftstrom L abgegeben werden kann. Der Luftstrom L strömt innerhalb des Deckenmoduls 11 von einem vorderen Bereich in einen hinteren Bereich desselben.

Die Temperiereinrichtung 15 umfasst ferner einen Lüfter 23, der luftstromabwärts zu dem Heizgerät 20 in dem hinteren Bereich des Deckenmoduls 11 angeordnet ist. Der Lüfter 23 bewirkt ein Umwälzen des Luftstroms L, so dass eine Luftzirkulation zwischen dem Innenraum 3 und dem hinteren Luftkanal 6 gewährleistet ist. Während im Innenraum 3 der Luftstrom L im Wesentlichen in vertikaler Richtung nach oben strömt, strömt der Luftstrom L im hinteren Luftkanal 6 im Wesentlichen vertikal nach unten. Innerhalb des Deckenmoduls 11 strömt der Luftstrom L in horizontaler Richtung.

Der Lüfter 23 ist vorzugsweise so ausgerichtet, dass die von ihm umgewälzte Luft in Richtung eines oberen Endes des hinteren Luftkanals 6 durch einen Luftauslaß 26 des Deckenmoduls 11 geleitet wird. Die Luft wird somit in den Luftkanal 6 eingeleitet, von wo aus eine Aufteilung in Richtung der vorderen Schubfächer 4 erfolgen kann.

Das Gehäuse 2 weist neben dem Deckenmodul 11, der Rückwand 7 und den Seitenwänden 9 eine Bodenwand 24 auf, die einen unteren Abschluss des Gehäuses 2 bildet. An der Bodenwand 24 sind in üblicherweise Rollen 25 angebracht, so dass der Temperierschrank 1 bewegbar angeordnet ist.

Das Deckenmodul 11 erstreckt sich in einer Deckenebene D, die parallel zur Bodenwand 24 bzw. senkrecht zur Rückwand 7 bzw. senkrecht zum Luftkanal 6 verläuft. Die Deckenebene D erstreckt sich vorzugsweise in horizontaler Richtung.

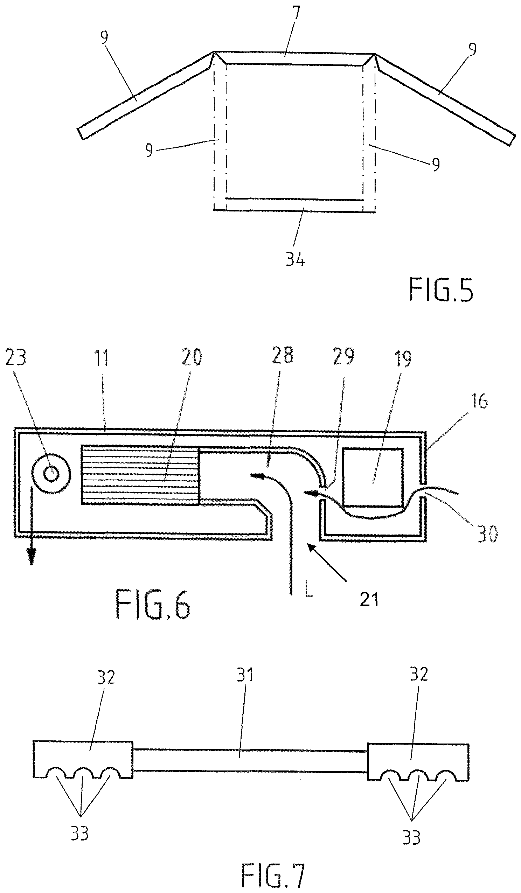

In dem Deckenmodul 11 bildet sich in einem Bereich zwischen dem Lufteinlass 21 und dem Lüfter 23 ein horizontaler Luftkanal 28 aus, so dass eine Luftzirkulation zwischen dem vertikalen hinteren Luftkanal 6 und dem Innenraum 3 des Temperierschrankes 1 gewährleistet ist. Nach einer Ausführungsform der Erfindung gemäß Figur 6 kann der Luftkanal 28 des Deckenmoduls 11 auf einer der Vorderseite 16' derselben zugewandten Seite eine Öffnung 29 aufweisen. Die Vorderseite 16' des Deckenmoduls 11 bzw. die Bedienleiste 16 weist ebenfalls eine Öffnung 30 auf, so dass aufgrund des sich im Bereich der Öffnung 29 ausbildenden Unterdrucks ein Kühlluftstrom K von der Umgebung angesaugt wird, der entlang einer Oberfläche der Steuereinrichtung 19 streicht und dann durch die Öffnung 29 in den horizontalen Luftkanal 28 eintritt. Mittels der Umströmung der Steuereinrichtung 19 durch den Kühlluftstrom K erfolgt eine Kühlung derselben, ohne dass ein zusätzlicher Kühllüfter vorgesehen sein müsste. Es kann sich somit ein Bypasskanal ausbilden, der durch eine Flachseite der Steuereinrichtung 19 und die Bodenwandung 12 des Deckenmoduls 11 begrenzt ist.

Der Temperierschrank 1 weist auf einer Rückseite im oberen Bereich eine Griffstange 31 auf, die endseitig durch Halterungen 32 begrenzt ist. Die Griffstange 31 sowie die an beiden Enden der Griffstange 31 anschließenden Halterungen 32 bilden eine Randseite des Deckenmoduls 11. Untenseitig und/oder seitlich abragend in Richtung der Erstreckungsebene des Deckenmoduls 11 abragend von den Halterungen 32 kann eine Anzahl von Einklemmnuten 33 vorgesehen sein, so dass ein Kabel formschlüssig an den Temperierschrank 1 gehalten ist.

Die Rückwand 7 ist einstückig mit den beiden Seitenwänden 9 verbunden.

Zueinander gekehrte Ränder der Rückwand 7 einerseits und der Seitenwände 9 andererseits sind über Materialverdünnung so miteinander verbunden, dass ein Scharnier gebildet wird, mittels dessen die Seitenwände 9 aus einer Nichtmontageposition (durchgezogene Linie in Figur 5) in einem senkrecht zur Rückwand 7 verlaufenden Montageposition (gestrichelte Linie in Figur 5) bringbar sind. In dieser Montageposition sind die gegenüberstehenden aufrechten Seitenwände 9 über eine Traverse 34 miteinander verbunden. Die Traverse 34 erstreckt sich senkrecht zu den Seitenwänden 9 an einem vorderen Rand derselben. Die Traverse 34 ist beispielsweise durch Verschraubung an den Seitenwänden 9 befestigt.

Das Deckenmodul 11 ist lösbar und oberhalb der Rückwand 7 und der Traverse 34 mit denselben verbunden.

Nach einer nicht dargestellten alternativen Ausführungsform der Erfindung können Öffnungen in dem Luftkanal 6 auch so ausgebildet sein, dass der Luftstrom 11 die Schubladen nicht nur von unten durch die Ablageböden 4, sondern auch von einer aufrechten Seite her durchströmt. Bei dieser Ausführungsform erstrecken sich von den Ablageböden 4' aufrechte Seitenwände, die mit entsprechenden Schlitzen versehen sind. Die Seitenwände sind mit den Ablageböden fest verbunden und in Auszugsrichtung verschiebbar gelagert - wie bei dem vorhergehenden Ausführungsbeispiel -.

## Patentansprüche

1. Temperierschrank, insbesondere Wärmeschrank zum Vorwärmen von medizinischen Produkten wie Infusionen, Decken und dergleichen, mit einem Gehäuse (2) enthaltend eine Bodenwand (24), eine Deckenwand, eine die Bodenwand (24) mit der Deckenwand verbindende Rückenwand (7) sowie zu beiden Seiten desselben verlaufende aufrechte Seitenwände (9) zur Bildung einer Anzahl von Fächern (4) innerhalb des Gehäuses, mit einer Temperiereinrichtung zur Erzeugung eines im Innenraum (3) des Gehäuses (2) fließenden Luftstroms (L), so dass das in dem Fach (4) gelagerte Produkt (5) mit einer vorgegebenen Temperatur beaufschlagbar ist, dass die Deckenwand als ein gehäuseartiges Deckenmodul (11) ausgebildet ist, in dem die Temperiereinrichtung (15) und eine Bedieneinrichtung (14) angeordnet sind, und dass das Deckenmodul (11) an der Rückwand (7) und/oder an der Seitenwand (9) und/oder an einer die beiden Seitenwände (9) verbindenden Traverse (34) lösbar befestigt ist, **dadurch gekennzeichnet,**
- **dass** das Deckenmodul (11) auf einem dem Innenraum (3) des Gehäuses (2) zugewandten Seite eine Bodenwandung (12) aufweist, die in einem vorderen Bereich einen Lufteinlaß (21) und in dem hinteren Bereich einen Luftauslaß (26) aufweist, und dass das Deckenmodul (11) eine parallel zur Bodenwandung (12) verlaufenden Deckenwandung (13) in einem solchen Abstand (b) zu der Bodenwandung (12) aufweist, dass Bauteile der Temperiereinrichtung (15) und/oder der Bedieneinrichtung (14) zwischen der Bodenwandung (12) und der Deckenwandung (13) Platz finden,
- **dass** die Temperiereinrichtung (15) einen Lüfter (23) umfasst, der luftstromabwärts zu dem Temperiergerät (20) in dem hinteren Bereich des Deckenmoduls (11) angeordnet ist,
- **dass** sich an dem Luftauslaß (26) in vertikaler Richtung nach unten gerichtet ein hinterer Luftkanal (6) anschließt, der auf einer dem Innenraum (3) zugewandten Vorderseite eine vordere Kanalwand (8) mit einer Anzahl von den Fächern (4) zugeordneten Durchbrechungen (10) aufweist, durch die der Luftstrom (L) den jeweiligen Fächern (4) von einer Rückseite und/oder von einer Unterseite derselben zugeführt wird,
- **dass** innerhalb des Deckenmoduls (11) der Luftstrom (L) in horizontaler Richtung strömt.

2. Temperierschrank nach Anspruch 1, **dadurch gekennzeichnet, dass** das Deckenmodul (11) an einer vorderen Schmalseite (16') ein Display (18) aufweist, an dem sich in rückwärtiger Richtung eine elektronische Steuerschaltung (19) anschließt.

3. Temperierschrank nach Anspruch 1 oder 2, **dadurch gekennzeichnet, dass** die Temperiereinrichtung (15) in einem Bereich zwischen dem Lufteinlaß (21) und dem Luftauslaß (26) ein Temperiergerät (20) und einen sich in der Deckenebene (D) anschließenden Lüfter (23) aufweist.

4. Temperierschrank nach einem der Ansprüche 1 bis 3, **dadurch gekennzeichnet, dass** sich die Durchbrechung (10) in einer Horizontalebene erstreckt, die unterhalb eines Ablagebodens (4') der jeweiligen Fächer (4) angeordnet ist, und dass der Ablageboden (4') des Faches (4) Lochungen aufweist zum Durchtritt des Luftstroms (L) in das jeweilige Fach (4) von unten.

5. Temperierschrank nach einem der Ansprüche 1 bis 4, **dadurch gekennzeichnet, dass** der Luftkanal (6) Leitelemente aufweist zur Umlenkung des Luftstrom (L) in Richtung der Durchbrechung (10).

6. Temperierschrank nach einem der Ansprüche 1 bis 5, **dadurch gekennzeichnet, dass** sich an den Lufteinlass (21) ein horizontaler Luftkanal (28) anschließt zur Zuführung des Luftstroms (L) zu der Temperiereinrichtung (15), dass der horizontale Luftkanal (28) auf einer der Vorderseite des Deckenmoduls (11) zugewandten Seite eine Öffnung (29) und dass die vorderseitige Schmalseite (16') des Deckenmoduls (11) eine Öffnung (30) aufweist zur Bildung eines Kühlluftstroms (K), der sich aufgrund des sich bildenden Unterdrucks im Bereich der Öffnung (29) des Luftkanals (28) ausbildet zur Kühlung der Steuereinrichtung (19).

7. Temperierschrank nach einem der Ansprüche 1 bis 6, **dadurch gekennzeichnet, dass** in einem hinteren Bereich des Deckenmoduls (11) eine Griffstange (31) und Halterungen (32) mit Einklemmnuten (33) zum Einklemmen von einem Kabel vorgesehen sind.

8. Temperierschrank nach einem der Ansprüche 1 bis 7, **dadurch gekennzeichnet, dass** die Seitenwand (9) und die Rückwand (7) einstückig miteinander verbunden sind, wobei ein Scharnier gebildet ist zum Verschwenken der Seitenwand (9) relativ zu der Rückwand (7) in eine zu derselben senkrechten Montageposition.

## Claims

1. A temperature control cabinet, particularly a warming cabinet for prewarming medical products such as infusions, blankets and the like, having a housing (2) containing a bottom wall (24), a top wall, a rear wall (7) connecting the bottom wall (24) and the top wall, and upright side walls (9) running on either side thereof for forming a number of compartments (4) inside the housing, having a temperature control unit (15) for producing an air stream (L) flowing in the interior (3) of the housing (2) in order that a predetermined temperature can be applied to the product (5) stored in the compartment (4), the top wall being designed as a housing-like cover module (1), in which the temperature control unit (15) and an operating unit (14) are arranged, and the cover module (11) being detachably mounted on the rear wall (7) and/or on the side wall (9) and/or on a traverse (34) connecting the two side walls (9), **characterized in that**
- the cover module (11) comprises a bottom wall (12) on a side facing the interior (3) of the housing (2), which bottom wall comprises an air inlet (21) in a front region and an air outlet (26) in the rear region, and the cover module (11) comprises a top wall (13) running parallel to the bottom wall (12) at such a distance (b) from the bottom wall (12) that components of the temperature control unit (15) and/or of the operating unit (14) are accommodated between the bottom wall (12) and the top wall (13),
- the temperature control unit (15) includes a fan (23) which is arranged down the air stream from the temperature control device (20) in the rear region of the cover module (11),
- joined to the air outlet (26), directed downwards in the vertical direction, is a rear air duct (6) which comprises on a front side facing the interior (3) a front duct wall (8) having a number of apertures (10) assigned to the compartments (4), through which apertures the air stream (L) is supplied to the respective compartments (4) from a rear side and/or from an underside thereof,
- the air stream (L) streams in the horizontal direction within the cover module (11).

2. The temperature control cabinet according to Claim 1, **characterized in that** the cover module (11) comprises on a front narrow side (16') a display (18) to which an electronic control circuit (19) is joined in the reverse direction.

3. The temperature control cabinet according to Claim 1 or 2, **characterized in that** the temperature control unit (15) comprises a temperature control device (20) and a connecting fan (23) in the top plane (D) in a region between the air inlet (21) and the air outlet (26).

4. The temperature control cabinet according to any one of Claims 1 to 3, **characterized in that** the aperture (10) extends in a horizontal plane which is arranged beneath a tray bottom (4') of the respective compartments (4), and that the tray bottom (4') of the compartment (4) comprises perforations which allow the air stream (L) to penetrate the respective compartment (4) from below.

5. The temperature control cabinet according to any one of Claims 1 to 4, **characterized in that** the air duct (6) comprises guide elements for deflecting the air stream (L) in the direction of the aperture (10).

6. The temperature control cabinet according to any one of Claims 1 to 5, **characterized in that** joined to the air inlet (21) is a horizontal air duct (28) for supplying the air stream (L) to the temperature control unit (15), the horizontal air duct (28) comprises an opening (29) on a side facing the front side of the cover module (11) and the narrow side (16') on the front side of the cover module (11) comprises an opening (30) for forming a cooling air stream (K) which is designed to cool the control device (19) because of the negative pressure forming in the region of the opening (29) of the air duct (28).

7. The temperature control cabinet according to any one of Claims 1 to 6, **characterized in that** a handle bar (31) and holding devices (32) having clamping grooves (33) for clamping a cable are provided in a rear region of the cover module (11).

8. The temperature control cabinet according to any one of Claims 1 to 7, **characterized in that** the side wall (9) and the rear wall (7) are integrally connected to one another, wherein a hinge is formed for pivoting the side wall (9) relative to the rear wall (7) into a mounting position perpendicular thereto.

## Revendications

1. Armoire tempérée, en particulier armoire thermique pour le préchauffage de produits médicaux, comme infusions, couvertures et analogue, avec un corps (2), qui comprend une plaque de base (24), une plaque de toit, une paroi arrière (7) qui relie la plaque de base (24) à la plaque de toit, ainsi que des parois latérales (9), qui s'étendent verticalement des deux côtés de celui-ci pour former un nombre de compartiments (4) à l'intérieur du corps, avec une installation de régulation de température (15), destinée à générer un flux d'air (L) s'écoulant dans l'espace intérieur (3) du corps (2), de manière à ce que le produit (5) stocké dans le compartiment (4) soit soumis à une température prédéterminée, sachant que la plaque de toit est réalisée sous la forme d'un module de toit (11) en forme de caisson, dans lequel l'installation de régulation de température (15) et un dispositif de commande (14) sont disposés, et que le module de toit (11) est fixé de manière amovible à la paroi arrière (7) et / ou à la paroi latérale (9) et / ou à une traverse (34), qui relie les deux parois latérales (9),
**caractérisée en ce que**
- le module de toit (11) présente, sur un côté orienté vers l'espace intérieur (3) du corps (2), une plaque de fond (12), qui présente une admission d'air (21) dans un secteur antérieur et une évacuation d'air (26) dans un secteur postérieur, et que le module de toit (11) présente une plaque de toit (13), qui s'étend parallèlement à la plaque de fond (12), à une distance (b) de la plaque de fond (12) telle que les composants de l'installation de régulation de température (15) et / ou du dispositif de commande (14) puissent être placés entre la plaque de fond (12) et la plaque de toit (13),
- l'installation de régulation de température (15) comprend un ventilateur (23), qui est disposé dans le secteur arrière du module de toit (11) en aval du flux d'air par rapport à l'appareil de régulation de température (20),
- un canal d'air (6) arrière, orienté vers le bas dans la direction verticale, se raccordant à l'admission d'air (26), présente, sur une face antérieure, orientée vers l'espace intérieur (3), une paroi de canal antérieure (8) avec un nombre de jours (10), associés aux compartiments (4), par lesquelles le flux d'air (L) est conduit aux compartiments (4) respectifs par le dos et / ou par le dessous de celui-ci,
- le flux d'air (L) s'écoule à l'intérieur du module de toit (11) dans la direction horizontale.

2. Armoire tempérée selon la revendication 1, **caractérisée en ce que** le module de toit (11) présente, sur un côté étroit antérieur (16'), un display (18), auquel un circuit de commutation électronique (19) se raccorde en direction arrière.

3. Armoire tempérée selon revendication 1 ou 2, **caractérisée en ce que**, dans un secteur situé entre l'admission d'air (21) et l'évacuation d'air (26), l'installation de régulation de température (15) présente un appareil de régulation de température (20) et un ventilateur (23) qui se raccorde sur le plan de toit (D).

4. Armoire tempérée selon l'une des revendications 1 à 3, **caractérisée en ce que** le jour (10) s'étend sur un plan horizontal, qui est disposé au-dessous d'une tablette de rangement (4') des compartiments (4) respectifs, et que la tablette de rangement (4') du compartiment (4) présente des perforations pour que le flux d'air (L) puisse traverser d'en bas chacun des compartiments (4).

5. Armoire tempérée selon l'une des revendications 1 à 4, **caractérisée en ce que** le canal d'air (6) présente des éléments de guidage pour la dérivation du flux d'air (L) en direction du jour (10).

6. Armoire tempérée selon l'une des revendications 1 à 5, **caractérisée en ce que**, sur l'admission d'air (21), est raccordé un canal d'air horizontal (28) pour amener le flux d'air (L) à l'installation de régulation de température (15), que le canal d'air horizontal (28) présente une ouverture (29) sur une face orientée vers la face antérieure du module de toit (11) et que le côté étroit antérieur (16') du module de toit (11) présente une ouverture (30) pour la formation d'un flux d'air de refroidissement (K), qui, en raison de la dépression générée, se forme dans le secteur de l'ouverture (29) du canal pour le refroidissement de l'installation de commande (19).

7. Armoire tempérée selon l'une des revendications 1 à 6, **caractérisée en ce que**, dans un secteur arrière du module de toit (11), sont prévus une barre de poignée (31) et des supports (32) avec des rainures de serrage (33) pour le serrage d'un câble.

8. Armoire tempérée selon l'une des revendications 1 à 7, **caractérisée en ce que** la paroi latérale (9) et la paroi arrière (7) sont reliées ensemble d'une pièce, sachant qu'une charnière est formée pour le pivotement de la paroi latérale (9) par rapport à la paroi arrière (7) dans une position de montage verticale par rapport à celle-ci.
